# EUROPÄISCHE PATENTSCHRIFT

(11) **EP 1 259 351 B1**
(45) Veröffentlichungstag und Bekanntmachung des Hinweises auf die Patenterteilung: **06.05.2004**
(21) Anmeldenummer: 01919139.4
(22) Anmeldetag: 21.02.2001
(51) Int. Cl.: B23K 9/20

(54) **BOLZENSCHWEISSKOPF**
STUD WELDING HEAD
TETE DE SOUDAGE DE GOUJONS

(30) Priorität: 21.02.2000 DE 20003132 U
(43) Veröffentlichungstag der Anmeldung: 27.11.2002
(73) Patentinhaber: Nelson Bolzenschweiss-Technik GmbH & Co. KG, 58285 Gevelsberg (DE)
(72) Erfinder: MADSAK, Jürgen, 58339 Breckerfeld (DE); CITRICH, Ulrich, 58285 Gevelsberg (DE)
(74) Vertreter: Eder, Thomas, Dr.-Ing.
(86) Internationale Anmeldenummer: PCT/DE2001/000683
(87) Internationale Veröffentlichungsnummer: WO 2001/062427

(56) Entgegenhaltungen:
- DE-A- 4 314 528
- US-A- 5 977 506

## Beschreibung

Die Erfindung betrifft einen Bolzenschweißkopf mit einem Linearantrieb, einer mit dem Linearantrieb gekoppelten Schweißachse und einem Längenmeßsystem, das die Position der Schweißachse im Bolzenschweißkopf bestimmt. Ein Bolzenschweißkopf gemäß dem Oberbegriff des Anspruchs 1 ist aus der US-A-5 977 506 bekannt

Bolzenschweißgeräte werden beispielsweise in der Automobilbranche dazu verwendet, um Bolzen an einer Karosserie anzuschweißen. Das Schweißen erfolgt dadurch, dass zwischen dem im Schweißkopf gehalterten Bolzen und dem Werkstück eine hohe Spannung angelegt wird und es zur Erzeugung eines Lichtbogens kommt. Die Positionierung des Schweißbolzens, nämlich das Abheben des Schweißbolzens und Erzeugen des Lichtbogens sowie das anschließende Eintauchen des Bolzens in das Schweißgut sollte Weg gesteuert erfolgen, damit eine stets gleichbleibend hohe Schweißqualität erreicht wird. Bislang werden ausschließlich opto-elektronische Längen- oder Wegmesssysteme verwendet. Diese sind unempfindlich gegenüber den hohen Schweißströmen und den damit verbundenen Magnetfeldern. Starke Magnetfelder können in Bolzenschweißköpfen auch im Bereich des Linearantriebs erzeugt werden, denn die Linearantriebe arbeiten oft nach dem Tauchspulenprinzip, d.h. sie haben stromdurchflossene Spulen und Permanentmagneten. Die opto-elektronischen Längenmesssysteme sind jedoch anfällig gegenüber Schmutz. Da im Bereich des Schweißkopfes sehr viele Schweißspritze entstehen und die Umgebung oft sehr staubig ist, sind die bislang eingesetzten opto-elektronischen Wegmesssysteme abgedichtet im Schweißkopf untergebracht, was einen hohen Aufwand verursacht.

Die Erfindung schafft einen Bolzenschweißkopf, der sich durch einen einfachen Aufbau auszeichnet und dessen Längenmesssystem eine noch bessere Auflösung als die bislang eingesetzten Längenmesssysteme bietet.

Dies wird erfindungsgemäß durch einen Bolzenschweißkopf nach Anspruch 1 erreicht. Es hat sich in der Praxis herausgestellt, dass elektromagnetische Längenmesssysteme, die prinzipbedingt schmutzunempfindlich sind, in Bolzenschweißköpfen funktionsfähig sind. Dies ist für einen Fachmann völlig überraschend, da gerade in Bolzenschweißköpfen extrem hohe Schweißströme fließen und demzufolge starke elektromagnetische Felder erzeugt werden. Wie sich herausgestellt hat, lassen sich durch elektromagnetische Längenmesssysteme auch in Schweißköpfen Auflösungen erreichen, die deutlich höher als die von opto-elektronischen Längenmesssystemen sind.

Gemäß der bevorzugten Ausführungsform wird ein inkrementales Längenmesssystem mit einem Magnetband und einem Magnetsensor eingesetzt, wobei das Magnetband an der Schweißachse befestigt ist. Durch Vorsehen eines Magnetbandes ist der Aufwand zur Befestigung an der Schweißachse gering.

Darüber hinaus kann das Längenmesssystem eine verstellbare Auflösung haben, um es an die Gegebenheiten und Anforderungen anpassen zu können.

Bei der bevorzugten Ausführungsform ist ein Linearantrieb vorgesehen, welcher nach dem Tauchspulenprinzip arbeitet und mehrere hintereinandergeschaltete Spulen aufweist, in die sich wenigstens ein Permanentmagnet erstreckt, welcher mit der Schweißachse gekoppelt ist. Ein derartiger Linearantrieb hat den Vorteil, dass er eine exakte Positionierung der Schweißachse erreichen kann und sich ideal mit dem elektromagnetischen Längenmesssystem, welches eine hohe Auflösung aufweist, ergänzt. Da ein derartiger Linearantrieb ebenfalls extrem starke Magnetfelder erzeugt, ist es um so erstaunlicher, dass ein elektromagnetisches Längen- oder Wegmesssystem, insbesondere unter Verwendung eines Magnetbands und eines induktiven Magnetsensors hochgenau und dazu noch langzeitstabil funktioniert.

Weitere Merkmale und Vorteile der Erfindung ergeben sich aus der nachfolgenden Beschreibung und aus der nachfolgenden Zeichnung, auf die Bezug genommen wird.
- Fig. 1: zeigt eine Längsschnittansicht durch den erfindungsgemäßen Bolzenschweißkopf; und
- Fig. 2: zeigt eine Prinzipskizze des Linearantriebs des Bolzenschweißkopfes nach Figur 1.

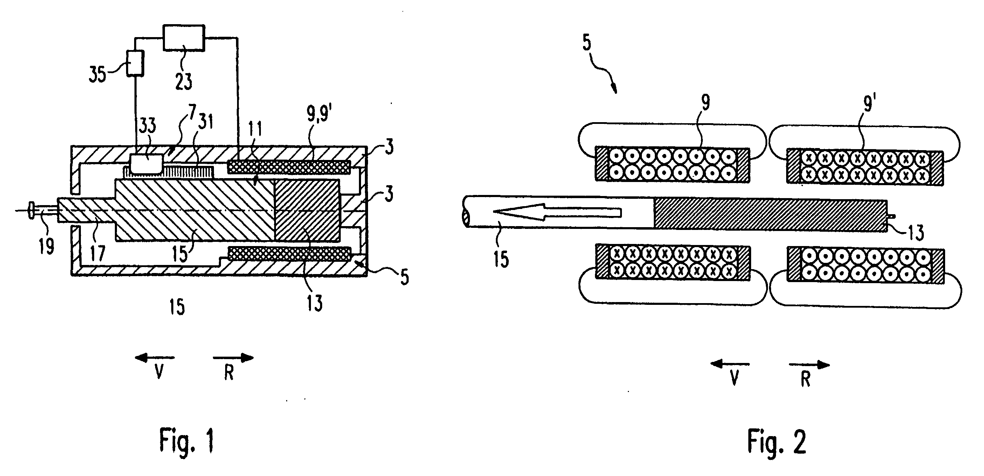

In Fig. 1 ist ein Bolzenschweißkopf stilisiert dargestellt, der ein Gehäuse 3, einen im Gehäuse 3 vorgesehenen, elektromagnetischen, axial wirkenden Linearantrieb 5 und ein elektromagnetisches Längen- oder Wegmesssystem 7 aufweist. Der Linearantrieb 5 besteht aus mehreren am Gehäuse 3 befestigten zylindrischen Spulen 9, 9' (siehe Fig. 2) und einer sich in das Innere der Spulen 9, 9' erstreckenden, jedoch auch aus ihr herausragenden Schweißachse 11. Die Schweißachse 11 wiederum besteht aus mehreren Abschnitten, nämlich einem hinteren Abschnitt 13 in Form eines oder mehrerer hintereinander angeordneten Permanentmagneten und einem langgestreckten, sich daran anschließenden zylindrischen Abschnitt 15, der ein vorderes Ende hat, welches als Bolzenhalter ausgebildet ist. In dem Bolzenhalter 17 ist ein zu verschweißender Bolzen 19 gesteckt und gehaltert.

Der in Fig. 1 dargestellte Bolzenschweißkopf arbeitet folgendermaßen:

Der Bolzenschweißkopf wird zu einem nicht dargestellten Werkstück, beispielsweise einem Fahrzeugblech zugestellt. Während des Zustellens des Schweißkopfes, welcher an einem Roboterarm befestigt ist, kann die Schweißachse 11 in der in Fig. 1 gezeigten Grundstellung sein. Wenn der Roboter den Schweißkopf nahe an das Werkstück herangebracht hat, wird die Schweißachse 11 in Vorschubrichtung V bewegt, bis die Spitze des Schweißbolzens 19 die Werkstückoberfläche kontaktiert. In dieser Stellung kann die Lage des Werkstücks ermittelt werden.

Nachdem die Werkstückoberfläche kontaktiert wurde, wird die Schweißspannung angelegt und die Antriebsachse 11 Weg- oder Geschwindigkeitsgesteuert um eine definierte Strecke in Richtung R in eine Soll- oder Zwischenposition verfahren, so dass der Lichtbogen mittels Hubzündung generiert wird. Zur Schaffung eines hohen Qualitätsstandards beim Schweißen ist es erforderlich, dass der Abstand Werkstück zu Schweißbolzen möglichst genau eingehalten wird, was mittels des hochauflösenden inkrementalen Längenmesssystems verbunden mit dem besonderen Linearantrieb 5 einfach zu erreichen ist. Deshalb werden Linearantrieb 5 und Längenmesssystem im Folgenden detaillierter beschrieben.

Der Linearantrieb 5, der nach dem Tauchspulenprinzip arbeitet, kann, wie Fig. 2 zeigt, mehrere Spulen aufweisen, beispielsweise zwei in Reihe geschaltete Spulen 9, 9' mit unterschiedlichen Wicklungsrichtungen, so dass zwei Elektromagnete mit entgegengesetzter Magnetflussrichtung entstehen, wie dies beispielsweise in der US 5 321 226 beschrieben ist. Der Permanentmagnet am hinteren Abschnitt 13 ragt in beide Spulen 9, 9' hinein und ist durch die Spulen 9, 9' in beide Richtungen verschiebbar.

Das Längenmesssystem 7 ist dazu da, die Lage der Antriebsachse 11 zu bestimmen und steht mit einer Steuereinheit 23 in Verbindung, die wiederum auch den Schweißstrom und die Spulen 9, 9' steuert.

Das elektromagnetische Längenmesssystem 7 besteht aus einem Magnetband 31, welches an der Schweißachse 11 befestigt ist, beispielsweise durch Kleben, und einem am Gehäuse 3 befestigten Magnetsensor 33. Über einen Drehcodierschalter 35 lässt sich die Auflösung des Längenmesssystems einstellen, beispielsweise im Bereich von 1 mm bis 0,005 mm.

Das Magnetband 31 umfasst eine Vielzahl linear angeordneter Permanentmagnete, beispielsweise in Form von Stabmagneten, die beispielsweise mit ihrer Achse quer zu Längsachse des Magnetbands ausgerichtet sind. Die Permanentmagnete können in Kunststoff eingebettet, beispielsweise eingespritzt sein. Falls erforderlich, kann auch eine Verstärkung desMagnetbandes mit Metallstreifen oder -drähten erfolgen. In der Längsrichtung des Magnetbandes 31 sind die Permanentmagnete vorzugsweise äquidistant beabstandet. Beispielsweise kann der Abstand zwischen zwei Permanentmagneten ca. 2 mm betragen.

Der Magnetsensor (hierunter wird jede Art von Sensor für das Detektieren eines Magnetfeldes verstanden) kann als induktiver Sensor ausgebildet sein. Werden Magnetsensor 33 und Magnetband 31 relativ zueinander bewegt, so erzeugt der Magnetsensor ein wellenförmiges Signal. Das Signal wird von einer Auswerteeinheit (nicht näher dargestellt), die beispielsweise in die Steuereinheit 23 integriert sein kann, ausgewertet und hieraus die Änderung der Position oder die absolute Position der Schweißachse 11 bestimmen. Beispielsweise kann das Signal des Magnetsensors äquidistant abgetastet werden und aus der Information über den Abstand zweier Extrema des Signals, der mit dem Abstand zweier Permanentmagnete in Längsrichtung des Magnetbandes korreliert, und aus dem Signalwert im Abtastpunkt, bezogen auf einen Extremwert, die Position der Schweißachse hochgenau ermittelt werden.

Wenn die Antriebsachse 11 schließlich in Vorschubrichtung V durch Betätigung des Linearantriebs 5 bewegt wird, erfolgt diese Bewegung vorzugsweise geregelt (closed loop feedback). Der Bolzen 19 taucht in die Schmelze ein und wird am Werkstück befestigt. Selbstverständlich wäre eine Steuerung der Bewegung ohne Regelung ebenfalls möglich.

## Patentansprüche

1. Bolzenschweißkopf mit einem Linearantrieb (5), einer mit dem Linearantrieb (5) gekoppelten Schweißachse (11) und einem elektromagnetischen Längenmesssystem (7), das die Position der Schweißachse (11) im Bolzenschweißkopf bestimmt,
**dadurch gekennzeichnet,**
**dass** das Längenmesssystem (7) eine Vielzahl in Bewegungsrichtung der Schweißachse (11) linear angeordneter Permanentmagnete und einen Magnetsensor (33) aufweist.

2. Bolzenschweißkopf nach Anspruch 1, **dadurch gekennzeichnet, dass** ein inkrementales Längenmesssystem vorgesehen ist

3. Bolzenschweißkopf nach Anspruch 1 oder 2, **dadurch gekennzeichnet, dass** die Permanentmagnete an oder in einem Band vorgesehen sind und ein Magnetband (31) bilden.

4. Bolzenschweißkopf nach einem der vorhergehenden Ansprüche, **dadurch gekennzeichnet, dass** die Permanentmagnete oder das Magnetband (31) an der Schweißachse (11) befestigt sind.

5. Bolzenschweißkopf nach einem der vorhergehenden Ansprüche, **dadurch gekennzeichnet, dass** das Längenmesssystem eine veränderbare Auflösung hat.

6. Bolzenschweißkopf nach einem der vorhergehenden Ansprüche, **dadurch gekennzeichnet, dass** ein nach dem Tauchspulenprinzip arbeitender Linearantrieb (5) vorgesehen ist.

7. Bolzenschweißkopf nach Anspruch 6, **dadurch gekennzeichnet, dass** der Linearantrieb (5) mehrere hintereinandergeschaltete Spulen (9, 9') aufweist, in die sich wenigstens ein Permanentmagnet erstreckt, der mit der Schweißachse (11) gekoppelt ist.

## Claims

1. Stud welding head, having a linear drive (5), a welding shaft (11) coupled with the linear drive (5), and an electromagnetic lengthwise measurement system (7) which determines the position of the welding shaft (11) in the stud welding head, **characterised in that**
the lengthwise measurement system (7) has a multiplicity of permanent magnets, linearly arranged in the direction of movement of the welding shaft (11), and a magnet sensor (33).

2. Stud welding head according to claim 1, **characterised in that** an incremental lengthwise measurement system is provided.

3. Stud welding head according to claim 1 or 2, **characterised in that** the permanent magnets are provided at or in a band and form a magnet band (31).

4. Stud welding head according to one of the preceding claims, **characterised in that** the permanent magnets or the magnet band (31) are attached to the welding shaft (11).

5. Stud welding head according to one of the preceding claims, **characterised in that** the lengthwise measurement system has a modifiable resolution.

6. Stud welding head according to one of the preceding claims, **characterised in that** a linear drive (5) operating according to the coil and plunger principle is provided.

7. Stud welding head according to claim 6, **characterised in that** the linear drive (5) has a plurality of series-connected coils (9, 9'), into which there extends at least one permanent magnet which is coupled with the welding shaft (11).

## Revendications

1. Tête de soudage de goujons comportant un dispositif d'entraînement linéaire (5), un axe de soudage (11) couplé au dispositif d'entraînement linéaire (5) et un système électromagnétique de mesure de longueur (7) qui détermine la position de l'axe de soudage (11) dans la tête de soudage de goujons, **caractérisée en ce que** le système de mesure de longueur (7) comporte un grand nombre d'aimants permanents disposés linéairement dans la direction de déplacement de l'axe de soudage (11), ainsi qu'un capteur magnétique (33).

2. Tête de soudage de goujons selon la revendication 1, **caractérisée en ce qu'**il est prévu un système incrémentiel de mesure de longueur.

3. Tête de soudage de goujons selon la revendication 1 ou 2, **caractérisée en ce que** les aimants permanents sont prévus sur ou dans une bande et forment une bande magnétique (31).

4. Tête de soudage de goujons selon l'une des revendications précédentes, **caractérisée en ce que** les aimants permanents ou la bande magnétique (31) sont fixés sur l'axe de soudage (11).

5. Tête de soudage de goujons selon l'une des revendications précédentes, **caractérisée en ce que** le système de mesure de longueur présente une résolution variable.

6. Tête de soudage de goujons selon l'une des revendications précédentes, **caractérisée en ce qu'**il est prévu un dispositif d'entraînement linéaire (5) fonctionnant suivant le principe des bobines mobiles.

7. Tête de soudage de goujons selon la revendication 6, **caractérisée en ce que** le dispositif d'entraînement linéaire (5) comporte plusieurs bobines (9, 9') couplées les unes derrière les autres dans lesquelles s'étend au moins un aimant permanent qui est couplé à l'axe de soudage (11).
